(19) Europäisches Patentamt

European Patent Office

Office européen des brevets

(11) Veröffentlichungsnummer: **0 326 831 B1**

(12) **EUROPÄISCHE PATENTSCHRIFT**

(45) Veröffentlichungstag der Patentschrift: **16.12.92**

(21) Anmeldenummer: **89100587.8**

(22) Anmeldetag: **13.01.89**

(51) Int. Cl.⁵: **E06B 9/68**, E05F 15/10, E05F 15/16

(54) **Vorrichtung für die Bewegung eines Torblattes.**

(30) Priorität: **13.01.88 DE 3800767**

(43) Veröffentlichungstag der Anmeldung:
**09.08.89 Patentblatt 89/32**

(45) Bekanntmachung des Hinweises auf die
Patenterteilung:
**16.12.92 Patentblatt 92/51**

(84) Benannte Vertragsstaaten:
**AT BE CH DE ES FR GB IT LI NL SE**

(56) Entgegenhaltungen:
**DE-A- 1 800 319**
**DE-A- 3 504 489**
**DE-U- 8 628 703**

(73) Patentinhaber: **HÖRMANN KG BIELEFELD**
**Bleichstrasse 67**
**W-4800 Bielefeld 1(DE)**

(72) Erfinder: **Hörmann, Stephan, Dipl.-Phys.**
**Hedwigstrasse 11,**
**W-4830 Gütersloh,(DE)**

(74) Vertreter: **Flügel, Otto, Dipl.-Ing.**
**Wissmannstrasse 14, Postfach 81 05 06**
**W-8000 München 81(DE)**

## Beschreibung

Die Erfindung bezieht sich auf eine Vorrichtung für die Bewegung eines Torblattes, insbesondere Rolltorpanzers, mittels eines motorischen Antriebes, vorzugsweise mit Elektromotor, und mittels eines wahlweise zu betätigenden Nothandantriebes, insbesondere mit abnehmbarer Handkurbel, dessen Abtriebswelle im Notbetrieb mit der Motorwelle des motorischen Antriebes in Verbindung steht, in die eine Lastmomentsperre eingeschaltet ist, die bei fehlender Krafteinleitung in den Nothandbetrieb die Motorwelle gegen Drehung gesichert festhält.

Eine bekannte Vorrichtung dieser Art - DE-A-35 04 489 - arbeitet mit zwei Bremsscheiben, die in die getriebliche Verbindung zwischen dem Nothandantrieb und der Abtriebswelle des Motors eingeschaltet sind. Die beiden Bremsscheiben arbeiten nach Art einer Reibungskupplung derart zusammen, daß die erste Bremsscheibe unter Federkraft an die zweite Bremsscheibe über Bremsbeläge angedrückt wird. Die zweite Bremsscheibe ist mit dem Nothandantrieb über eine Drehmomentsperre derart verbunden, daß nur bei Einleiten einer Kraft in den Nothandantrieb eine Drehmomentübertragung auf die zweite Bremsscheibe erfolgt, während bei Ausbleiben einer solchen Kraft die zweite Bremsscheibe von der Drehmomentsperre verdrehfest gehalten ist. Damit dient diese Kupplung einmal der Übertragung des erforderlichen Drehmomentes von der Nothandantriebsseite aus auf die Abtriebswelle des Motors und zum anderen bei Fehlen eines solchen Drehmomentes der Abstützung der Motorabtriebswelle gegen eine Drehbewegung immer dann, wenn der Motor nicht eingeschaltet ist oder ein Stromausfall eintritt, weil die erste Bremsscheibe nur bei stromdurchflossener Ständerwicklung des Motors gegen die Kraft der sie beaufschlagenden Feder aus dem Reibangriff an der zweiten Bremsscheibe abgezogen wird. Die Verwendung einer Reibungskupplung und deren Lösen durch das Magnetfeld des Motors lassen den Einsatzbereich dieser bekannten Vorrichtung auf leichtere Gegenstände beschränkt erscheinen, bei denen im übrigen keine Sicherheitsüberwachung gegen Absturz des Motors bei Zerstörung der getrieblichen Verbindung zwischen Antriebsmotor und Wickelwelle stattfindet.

Elektromotorisch angetriebene Torblätter, insbesondere Rolltorpanzer, sind überwiegend mit einer Sicherheitsüberwachung versehen, die aus einem auf der Wickelwelle angeordneten Sicherheitsschneckenrad und einer in dieses eingreifenden Sicherheitsschnecke besteht, die auf einer Welle oder mit ihrer Welle axial verschiebbar gelagert ist. Die Sicherheitsschnecke kann von einem elektrischen Stellmotor in Abhängigkeit von der Antriebsbewegung in Umdrehungen versetzt werden, d.h. gegenüber der Antriebsschneckenbewegung bzw. Antriebsgetriebebewegung "nachgeführt". Wenn sich aufgrund eines Fehlers die Antriebswelle des Torblattes bzw. die Wickelwelle des Rolltorpanzers anders als nach den jeweils beabsichtigten Antriebsbewegungen verhält, insbesondere also im Sinne eines Abstürzens des Torblattes beschleunigt, verschiebt sich die Sicherheitsschnecke in ihrer Achsrichtung und läuft dabei gegen einen Anschlag, vorzugsweise über eine Dämpfungseinrichtung, mit dem Erfolg an, daß von der Sicherheitsschnecke ein Bremsmoment über das Sicherheitsschneckenrad auf die Wickelwelle übertragen wird, so daß ein Abstürzen des Torblattes unterbleibt.

Für den Fall einer Störung im motorischen Antrieb, beispielsweise Ausfall des Versorgungsnetzes für einen Elektromotor, soll sich das Torblatt für diesen Notfall von Hand bewegen lassen. Zu diesem Zwecke kann eine handbetätigte Laufketteneinrichtung oder eine Handkurbel vorgesehen sein, deren Abtriebswelle in einem solchen Notfall auf die Motorwelle wirkt, um die vorhandene Getriebeeinrichtung auszunutzen und insbesondere auch deren Untersetzungsverhältnis für den Handbetrieb sicherzustellen. Sofern keine Getriebeselbsthemmung eintritt, ist es darüber hinaus erforderlich um in Sinne der Sicherheit anzustreben, an der Motorwelle eine Bremse angreifen zu lassen, die für den Fall einer Motorabschaltung oder eines Stromausfalles in Aktion tritt und eine freie Beweglichkeit des Torblattes verhindert.

Der Erfindung liegt die Aufgabe zugrunde, eine Vorrichtung der eingangs genannten Art zur Verfügung zu stellen, die bei mittels einer Fangeinrichtung aus Schnecke und Schneckenrad sicherheitsüberwachter Ausführung eine freie Beweglichkeit des Torblattes unterbindet, wenn die Einleitung einer Kraft auf den Nothandantrieb unterbrochen wird.

Ausgehend von einer Vorrichtung mit den eingangs genannten Merkmalen wird diese Aufgabe erfindungsgemäß dadurch gelöst, daß eine Sicherungseinrichtung für die Überwachung des motorischen Antriebes vorgesehen ist, die ein Fangglied aus einem an einer Wickelwelle für die Aufnahme des Torblattes angeordneten Sicherheitsschneckenrad und einer Sicherheitsschnecke aufweist, die aufgrund des Eingriffes mit dem Sicherheitsschneckenrad im Störungsfalle von letzterem angetrieben axial verschiebbar und hinsichtlich ihrer axialen Bewegung begrenzt ist, wobei die Sicherheitsschnecke unter normalen Betriebsbedingungen und im Notbetriebsfall, im letzteren über eine getriebliche Verbindung mit der Abtriebswelle des Nothandantriebs, hinsichtlich der Wickelwellenrotaton nachgeführt ist, daß die Motorwelle und die Nothandabtriebswelle zusammen mit wenigstens einer weiteren Welle koaxial angeordnet sind und daß die weitere Welle ein Getrieberad aufweist, das mit einem auf der Welle der Sicherheitsschnecke verdrehfest angeordneten Getrieberad getrieblich in Verbindung steht und mit Hilfe von Kupplungen mit der Motorwelle und der Nothandabtriebswelle verbindbar ist, welche Kupplungen im Normalbetriebsfall ausgerückt und im Notfall eingerückt sind, wobei einer der Kupplung die Lastmomentsperre zugeordnet ist.

Bei einem sicherheitsüberwachten motorischen Antrieb in bestimmter Ausgestaltung, bei der eine Sicherheitsschnecke hinsichtlich der motorisch eingeleiteten Bewegung der Wickelwelle für das Torblatt nachgeführt wird, wird dieses Nachführen auch dann durchgeführt, wenn bei Ausfall des motorischen Antriebes das Torblatt mit Hilfe des Nothandantriebes bewegt wird. Dazu sind Kupplungen vorgesehen, die die Motorwelle von der Nachführeinrichtung für die Sicherheitsschnecke und von der Nothandantriebswelle abtrennen. Damit wird ein Nothandantrieb, insbesondere in Gestalt einer Nothandkurbel, an die Motorwelle über eine Lastmomentsperre angeschlossen, die nicht in Kraft tritt, wenn die Antriebsbewegung von der Motorwelle ausgeht, und ebenfalls dann nicht, wenn eine Drehmomenteinleitung über den Nothandantrieb erfolgt; sie tritt jedoch dann in Sperraktion, wenn bei ausgefallenem Motorantrieb die Einleitung eines Drehmomentes über den Nothandantrieb nicht erfolgt oder unterbrochen wird.

Bevorzugte Ausgestaltungen der Erfindung ergeben sich aus den Unteransprüchen, insbesondere im Zusammenhang mit den in der Zeichnung wiedergegebenen Einzelheiten, anhand deren nachfolgender Beschreibung die Erfindung näher erläutert wird. Es zeigen

Figur 1    ein Blockschaltbild eines Ausführungsbeispieles im Prinzip;

Figur 2    einen schematischen Längsschnitt durch ein Ausführungsbeispiel einer Kupplungs- und Lastmomentsperreinrichtung;

Figur 3    einen schematischen Schnitt nach der Linie III-III in Figur 2.

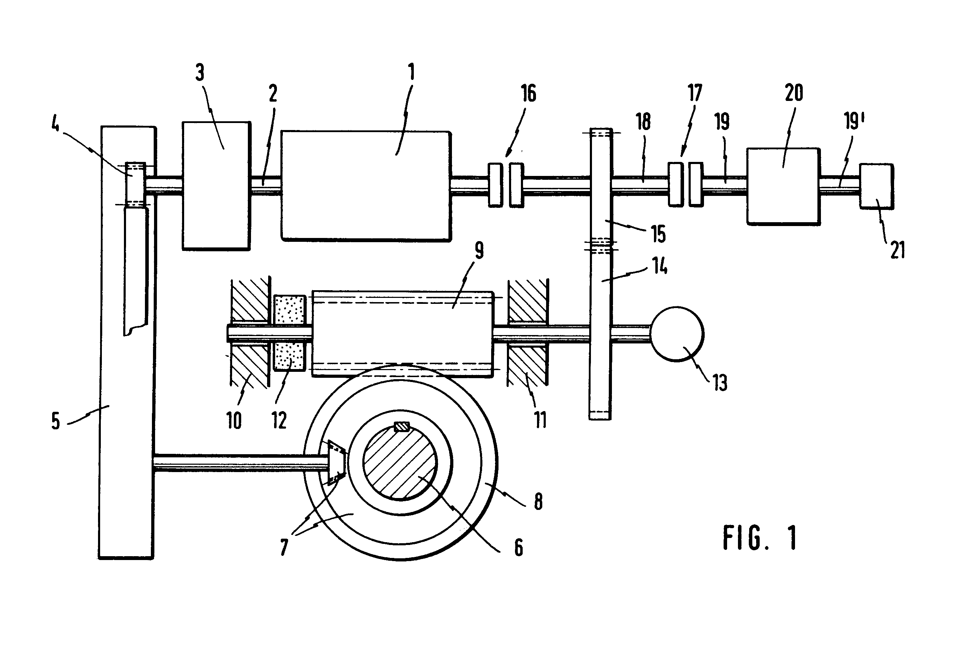

Das Blockschaltbild gemäß Figur 1 zeigt den Rotor eines Elektromotors 1 für den Antrieb im Normalbetrieb mit einer Motorwelle 2, die abtriebsseitig mit einer Bremse 3 versehen ist und darüber hinausgehend ein Abtriebsritzel 4 aufweist, das zu einem Getriebezug 5 gehört, der die Motorwelle 2 mit der Wickelwelle 6 eines Rolltorblattes verbindet. Ausgangsseitig ist dieses Getriebe über ein Kegelrad-Getriebeglied 7 an die Wickelwelle 6 angeschlossen. Das Blockschaltbild zeigt überdies ein Sicherheitsschneckenrad 8, das verdrehfest auf der Wickelwelle 6 angeordnet ist.

Bei normalem motorischem Antrieb wird das Drehmoment über das Abtriebsritzel 4 und das daran anschließende Getriebe 5 gegebenenfalls unter einer 90°-Umlenkung auf die Achse der Wickelwelle 6 für den Rolltorpanzer geleitet. Das auf dieser Achse angeordnete Sicherheitsschneckenrad 8 kämmt mit einer Sicherheitsschnecke 9, die im Blockschaltbild räumlich darüber angeordnet ist und in Lagern 10, 11 rotiert, welche eine axiale Verschiebung der Sicherheitsschnecke 9 zulassen. Diese im Blockschaltbild für den Notfall hin nach links gerichtet vorgesehene Axialverschiebung der Sicherheitsschnecke 9 erfolgt gegen einen Dämpfungskörper 12. In dem dem Dämpfungskörper 12 abgewandten Wellenbereich der Sicherheitsschnecke 9 ist ein Stellmotor 13 für das Nachfahren der Sicherheitsschnecke 9 im Normalbetrieb angeordnet. Zwischen dem Sicherheitsschneckengetriebe und dem Arbeitsgetriebe gibt es demnach keine starre getriebliche Verbindung, sondern die Schnecke wird insoweit über eine "elektrische Kopplung" bewegt. Darüber hinaus ist zwischen der Sicherheitsschnecke 9 und dem Stellmotor 13 ein Stirnzahnrad 14 angeordnet, das mit einem weiteren Stirnzahnrad 15 kämmt, welches auf einer weiteren Welle 18 verdrehfest angeordnet ist, die sich in Achsrichtung der Motorwelle 2 des Elektromotors 1 erstreckt. Zu beiden Seiten dieses letzteren Stirnrades 15 ist je eine Kupplung 16, 17 vorgesehen, wobei die von dem Zahnrad 15 aus gesehen links angeordnete Kupplung 16 den Anschluß zu der Motorwelle 2 herstellt, während die entgegengesetzte, nämlich im Blockschaltbild rechts angeordnete Kupplung 17 die weitere Welle 18 mit einer Abtriebswelle 19 verbindet, die mit einer Lastmomentsperre 20 versehen ist und die in dem der Kupplung abgewandten Endbereich der Aufnahme einer Nothandkurbel 21 dient.

Bei normalem Elektromotor-Betrieb sind die beiden Kupplungen 16 und 17 geöffnet. Der Elektromotor 1 treibt unter Normalbetriebsbedingungen der Bremse 3 (gelöst) die Wickelwelle 6 an. Als Fangeinrichtung läuft die Sicherheitsschnecke 9 mit, wie dies vorstehend ausgeführt wurde. Das vom Stellmotor 13 der Sicherheitsschnecke 9 angetriebene Stirnzahnrad 14 rotiert aufgrund der geöffneten Kupplungen 16 und 17 gemeinsam mit dem zwischen den Kupplungen angeordneten, kämmenden Stirnzahnrad 15 frei mit.

Fällt beispielsweise der Elektromotor 1 aus, so wird der Nothandantrieb dadurch eingeschaltet, daß beide Kupplungen 16 und 17 geschlossen werden. Dies kann einfach durch entsprechend axiale Verschiebung geschehen. Nunmehr kann der Nothandantrieb ausgehend von der Handkurbel 21 über die Lastmomentsperre 20, die in dieser Richtung die Übertragung eines Drehmomentes zuläßt, über die rechte Kupplung 17 und die linke Kupplung 16 sowie den Rotor des Elektromotors 1 und das abtriebsseitig an diese anschließende Getriebe auf die Wickelwelle 6 bzw. den damit verbundenen Wickelkörper für den Rolltorpanzer wirksam werden. Soweit die Bremse 3 bei Ausfall oder Abschalten des Elektromotors 1 selbsttätig in ihre Bremslage übergeht, wird sie durch die mit dem Einkuppelvorgang der Kupplungen 16 und 17 einhergehende Axialverschiebung gelöst. Der Stellmotor 13 ist ebenfalls außer Betrieb, und zwar aufgrund eines vorausgesetzten Stromausfalles. Solange ein Drehmoment über die Nothandkurbel 21 oder dergleichen in die Drehmomentübertragungsstrecke eingeleitet wird, wird die Sicherheitsschnecke 9 über das Paar kämmender Stirnzahnräder 14, 15 mitgeführt, und zwar derart, daß das Übersetzungsverhältnis von der Motorwelle 2 bis zur Wickelwelle 6 und von dort vom Schneckenrad 8 auf die Sicherheitsschnecke 9 dasselbe ist wie dasjenige des Stirnzahnräderpaares 14, 15. Damit wird sichergestellt, daß bei Betätigung der Motorwelle von Hand die Sicherheitsschnecke 9 derart mitgeführt ist, wie dies durch den Stellmotor 13 bei Normalbetrieb bewirkt wird.

Wird die Einleitung eines Drehmomentes von Hand beendet, beispielsweise also die Nothandkurbel 21 losgelassen, so verhindert die Lastmomentsperre 20 eine Übertragung des Drehmomentes bzw. eine Drehung der Motorwelle. Die der Lastmomentsperre 20 im Blockschaltbild benachbarte, links wiedergegebene Kupplung 17 wird vielmehr über die Lastmomentsperre "ortsfest" gehalten. Damit ist eine Drehung des gesamten Antriebsstranges verhindert. Entgegen dem Normalbetrieb, in dem die Sicherheitsschnecke 9 im Notfalle als Fangeinrichtung wirkt, wird hier die Wickelwelle 6 durch die Lastmomentsperre 20 festgehalten. Die dabei auftretenden Belastungen sind insoweit akzeptabel, als der Nothandbetrieb bereits den Ausnahmefall bildet.

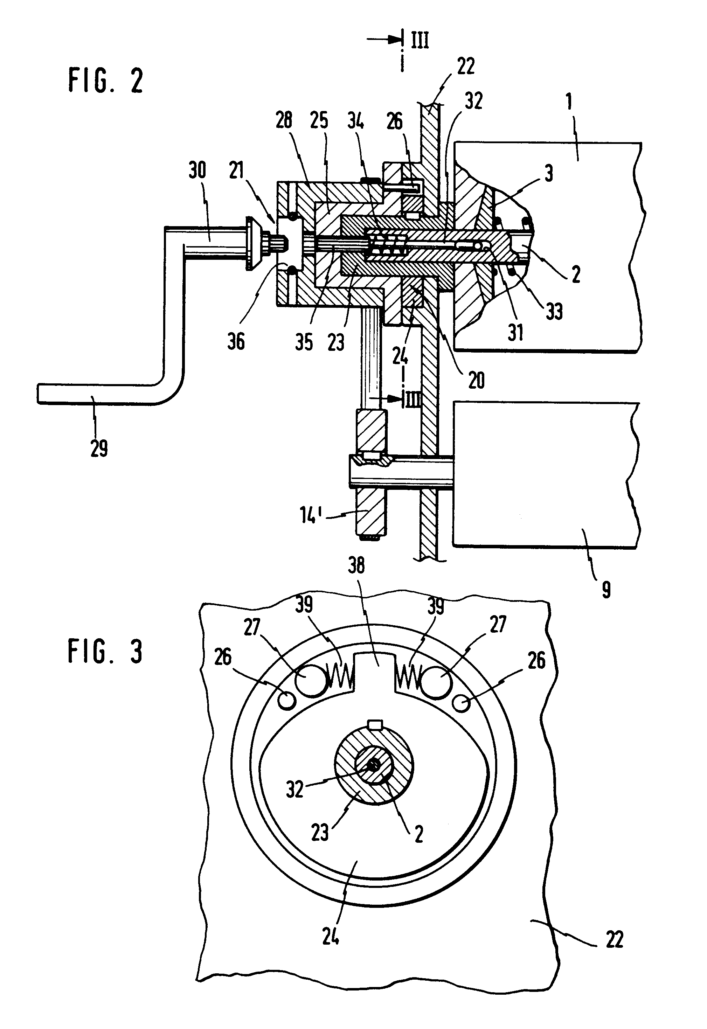

In den Figuren 2 und 3 ist schematisch ein Ausführungsbeispiel für die konstruktive Ausgestaltung der Kupplungen und der Lastmomentsperre wiedergegeben. An einer ortsfest gehaltenen Gehäusewandung 22 ist drehbar eine Sperrhülse 23 gelagert, in der in einer entsprechenden Ausnehmung die Motorwelle 2 frei drehbar gelagert ist. Die Sperrhülse 23 weist ein Lastmomentsperrad bzw. eine entsprechende Auskragung 24 auf, die in eine kreiszylindrische Ausbildung des ortsfesten Gehäuseteils 22 eingreift. An der Sperrhülse 23 ist frei drehbar eine Schalthülse 25 gelagert, die mit Schaltstiften 26 versehen ist, welche an Klemmkörpern 27 angreifen, die federbelastet an der Lastmomentsperrscheibe 24 abgestützt sind, wie dies Figur 3 zeigt und später noch erläutert wird.

Wiederum an der Schalthülse 25 ist eine Nachführhülse 28 frei drehbar gelagert, die die Aufnahmeausbildung 21 für eine einsetzbare Nothandkurbel 29 aufweist.

Die Motorwelle 2 ist mit einer Aufnahmebohrung 31 versehen, in welche ein Rückstell- und Kupplungsstift 32 längsverschiebbar eingreift. Die hier als Sackbohrung ausgeführte Aufnahmebohrung 31 für den Stift 32 endet derart im Bereich der Betätigungsausbildung der Bremse 3, daß bei Einschieben des Stiftes 32 über eine bestimmte Stellung hinaus die Bremse 3 in den gelösten Zustand überführt wird, was angedeuteter Weise gegen die Kraft einer Feder 33 geschieht. Die Längsverschiebbarkeit des Stiftes 32 kann durch eine geeignete Langlochausbildung oder dergleichen begrenzt sein, so daß der Stift insbesondere nicht in seiner der Lösungsrichtung der Bremse abgewandten Längsverschieberichtung aus dem Eingriff mit der Ausnehmung 31 heraus gleiten kann. Im übrigen ist der Stift mit Hilfe einer Rückstellfeder 34 in Gegenrichtung zur Loslöserichtung der Bremse beaufschlagt, so daß er die in Figur 2 wiedergegebene Stellung einnimmt.

Der Stift 32 hat einen Rückstellbereich, der zum Lösen der Bremse dient und sich im Inneren der Ausnehmung 31 der Motorwelle 2 befindet. In Stiftlängsrichtung von der Welle fort gesehen setzt sich die Ausnehmung 31 durch die jeweils aufeinanderfolgend angrenzenden Stirnwände der Hülsen 23, 25 und 28 fort. In einem in diese Richtung gesehenen Endbereich der Ausnehmung 31 sowie in den anschließenden stirnseitigen Öffnungsbereichen der Sperrhülse 23 und der Schalthülse 25 sind mit gleichem Durchmesser durchgehende Öffnungsausbildungen vorgesehen, die eine längsverschiebliche verdrehsichere Aufnahme eines sich in dieser Richtung an den Rückstellbereich anschließenden Kupplungsbereiches 35 des Stiftes 32 ermöglichen. Bei dieser längsverschieblichen und verdrehsicheren Aufnahme kann es sich um längs der Stiftachse verlaufende Riffelungen, Mehrkantausbildungen und dergleichen handeln.

Die sich auch durch die Stirnseite der Nachführhülse 28 fortsetzende Öffnung mündet in den Aufnahmeraum 21 für die Nothandkurbel 29, die einen sich in Längsrichtung der Motorwelle 2 erstreckenden Antriebswellenansatz 30 aufweist. Das Ende der Antriebswelle ist in den Aufnahmeraum 21 einführbar. Dabei durchgreift ein Endabsatz geringeren Durchmessers die stirnseitige Öffnung der Nachführhülse 28 und greift an dem zugewandten Kopfende des Stiftes 32 an, um diesen in Richtung auf das Lösen der Bremse hin zu verschieben. Ein sich in Achsrichtung an den Absatz geringeren Durchmessers anschließender etwas größerer Absatz greift dabei in die stirnseitige Öffnung der Nachführhülse 28 ein. Die Eingriffe sind dabei derart, daß sie eine Längsverschiebung in Achsrichtung zulassen, jedoch jeweils einen verdrehsicheren Eingriff gewährleisten. Die Handkurbel 29 wird in dem eingesetzten Zustand durch eine nur angedeutet wiedergegebene Kurbelraste 36 gehalten, die einerseits ein Einsetzen der Kurbel und andererseits auch deren Entfernen aus der Aufnahmeausbildung 21 zuläßt.

In einem Oberflächenbereich der Nachführhülse 28 ist eine Aufnahmeausbildung für einen Keilriemen oder dergleichen vorgesehen, der mit einem entsprechend ausgebildeten Getrieberad 14' zusammenarbeitet, das auf der Welle der Sicherheitsschnecke 9 befestigt ist und sich insoweit mit dem Zahnrad 14 gemäß Figur 1 vergleichen läßt. Die Nachführhülse 28 überträgt somit eine Drehbewegung auf die Welle der Sicherheitsschnecke 9, und zwar in dem Übersetzungsverhältnis, wie es im Zusammenhang mit dem Ausführungsbeispiel gemäß Figur 1 angesprochen wurde.

Die Länge des Kupplungsbereiches 35 des Stiftes 32 steht zu den Längen der stirnseitigen Öffnungen der Schalthülse 25 und der Sperrhülse 23 sowie des den Kupplungsbereich aufnehmenden Anfangsbereiches der Aufnahmebohrung 31 der Motorwelle 1 in einem bestimmten Verhältnis, so daß bei nicht in die Aufnahmeöffnung 21 eingesetzter Handkurbel 29 und somit in Richtung des Raumes 21 unter der Kraft der Feder 34 verschobenem Stift 32 dessen Kupplungsbereich 35 nur die stirnseitigen Öffnungen der Schalthülse 25 und der Sperrhülse 23 durchgreift, so daß diese beiden Hülsen verdrehfest miteinander verbunden sind, während sich die Motorwelle 2 frei dreht ebenso wie die Nachführhülse 28. Mit Bezug auf Figur 1 bedeutet dies den Öffnungszustand der Kupplungen 16 und 17. Dies ist der Normalbetrieb, die Bremse ist bei Abschalten des Motors und bei Stromausfall wirksam.

Bei Stromausfall geht die Bremse in den Schließzustand über, so daß die Motorwelle 2 bei funktionsfähigen Arbeitsgetriebe festgelegt wird. Damit läßt sich das Torblatt nicht mehr bewegen bzw. wird gefangen. Um von Hand einen Notbetrieb aufrechtzuerhalten, wird die Nothandkurbel 29 in die Aufnahmeöffnung 21 derart eingeführt, daß sie den Stift 32 auf die Bremse im Sinne deren Lösen verschiebt. Dabei wird der Kupplungsbereich 35 des Stiftes 32 derart verschoben, daß er nunmehr nur noch die Sperrhülse 23 und den Anfangsbereich der Aufnahmebohrung 31 der Motorwelle 2 verdrehsicher verbindet, während die Schalthülse 25 von dem Kupplungsbereich 35 freigegeben ist. Die Schalthülse 25 wird jedoch in diesem Zustand über die Endausbildung der Abtriebswelle verdrehfest mit der Nachführhülse 28 verbunden. Wird nunmehr die Handkurbel betätigt, so erfolgt eine Drehmomentübertragung über die Lastmomentsperre 20 auf die Motorwelle 2 sowie von der Nachführhülse 28 auf die Welle der Sicherheitsschnecke 9. Das Torblatt läßt sich auf diese Weise bewegen.

Wird die über die Nothandkurbel 29 eingeleitete Kraft unterbrochen, so muß das Torblatt gehalten, d.h. die Motorwelle 2 gegen weitere Verdrehung bzw. Rückdrehung festgelegt werden. Dies geschieht mit Hilfe der Lastmomentsperre 20, die in Figur 3 im Schnitt wiedergegeben ist. Die an der Sperrhülse 23 ausgebildete bzw. gegenüber dieser verdrehfest angeordnete Sperrscheibe 24 greift in eine zylinderförmige Öffnung 37 ein, die an der ortsfesten Gehäusewandung 22 ausgebildet ist. Die Scheibe 24 selbst ist derart mit Aussparungen versehen, daß ihr Umfang in beiden möglichen Drehrichtungen gesehen gegen einen Zapfen 38 hin sich radial verkleinernd ausgebildet ist. Die dadurch entstehenden winkelförmigen Räume nehmen jeweils kugel- oder walzenförmige Klemmkörper 27 auf, deren jeder an dem Zapfen 38 über eine Feder 39 abgestützt ist, die den jeweiligen Klemmkörper 27 von dem Zapfen 38 fortgerichtet druckbeaufschlagt. Von den an der Scheibe 24 radial abragend einstückig ausgebildeten Zapfen 38 aus gesehen sind in der jeweiligen Drehrichtung hinter den Klemmkörpern 27 die Schaltstifte 26 angeordnet, die an der Schalthülse 25 einstückig oder fest an dieser angeordnet sind. Werden die Schaltstifte 26 nicht in Umfangsrichtung verdreht, so bleiben die Klemmkörper 27 unter der Kraft ihrer Federn 38 in Richtung auf einen klemmenden Eingriff zwischen der Stirnseite der Scheibe 24 und der Innenwandung der zylindrischen Ausnehmung 37 beaufschlagt, so daß in jeder der beiden Drehrichtungen eine Verklemmung mit dem Resultat erzielt wird, daß sich die Scheibe 24 und damit die Sperrhülse 23 nicht drehen kann. Ist also die Nothandkurbel 29 in die Ausnehmung 21 eingeführt und der Stift 32 derart verschoben, daß sein Kupplungsbereich 35 die Motorwelle 2 mit der Sperrhülse 23 verbindet, dann wirkt sich diese Blockade auf die Motorwelle 2 aus. Sobald jedoch die Nothandkurbel 29 einer Drehkraft ausgesetzt wird, führt dies dazu, daß die Schalthülse 25 entsprechend verdreht wird, so daß die Schaltstifte 26 bzw. derjenige, der in Drehrichtung auf seinen zugehörigen Klemmkörper 27 zu bewegt wird, an diesem angreift und ihn gegen die Kraft der Feder 39 auf den Zapfen 38 zu verschiebt, so daß in dieser Drehrichtung keine Klemmung stattfinden kann und eine Mitnahme der Scheibe 24 und damit der Sperrhülse 23 und über den Stift 32 der Motorwelle 2 erfolgt, wodurch die von Hand eingeleitete Drehbewegung auf die Wikkelwelle übertragen wird.

Wird - Figur 2 - die Handkurbel 29 aus der Ausnehmung 21 der Nachführhülse 28 herausgezogen, so bewegt sich der Stift 32 unter der Kraft der Feder 34 in die in Figur 2 wiedergegebene Position, so daß nunmehr wieder die Schalthülse 25 mit der Sperrhülse 23 verdrehsicher gekoppelt ist, während sich die Motorwelle 2 frei drehen kann. Zugleich aber wird aufgrund der Bewegung des Stiftes 32 dessen Rückstellbereich von der Bremse fortgeführt, so daß diese in Aktion tritt und die Motorwelle gegen Verdrehen festhält, bis entweder ein erneuter Betrieb über die Handkurbel 29 oder aber über den Elektromotor 1 erfolgt.

Zusammenfaßt ergeben sich folgende Betriebszustände: Normalbetrieb: Die Motorwelle 2 läuft frei in der Sperrhülse 23. Der Kupplungs- und Rückstellstift 32 verbindet die Sperrhülse 23 mit der Schalthülse 25. Die Lastmomentsperre 20 ist außer Funktion. Die Nachführhülse 28 mit Zahnriemenscheibe oder dergleichen dreht sich lose auf der Schalthülse 25.

Handbetrieb: Beim Einschieben des Abtriebswellenstumpfes 30 der Handkurbel 29 wird der Kupplungs- und Rückstellstift 32 aus der Schalthülse 25 herausbewegt. Der abgestuft ausgebildete Endbereich der Abtriebswelle 30 der Handkurbel 29 verbindet die Schalthülse 25 mit der Nachführhülse 28. Der Kupplungs- und Rückstellstift 32 verbindet über seinen Kupplungsbereich 35 die Sperrhülse 23 mit der Motorwelle 2. Der Rückstellbereich des Stiftes 32 löst die Bremse 3. Die Sperrhülse 23 ist gegenüber der Schalthülse 25 frei verdrehbar, da der Endbereich des Abtriebswellenstumpfes 30 gegen den Kupplungs- und Rückstellstift 32 drückt und diesen entsprechend verschiebt. Die Lastmomentsperre 20 ist eingeschaltet.

Betrachtung des Kraftverlaufes:

Kraftfluß von der Handkurbel: Die Kraft, je nach Drehrichtung, wird über die Schaltstifte 26 gegen den jeweiligen Klemmkörper 27 aufgebracht. Der jeweilige Klemmkörper 27 wird gegen die Kraft der zugehörigen Feder 39 auf den Abstützzapfen 38 der Sperrscheibe 24 aufgebracht, und somit wird der Klemmkörper aus dem jeweiligen keilförmigen Spalt zwischen der Scheibe 24 und der Innenwandung der zylindrischen Ausnehmung der ortsfesten Gehäusewandung 22 herausgedrückt. Der gegenüberliegende Klemmkörper weicht selbstständig gegen den Abstützzapfen 38 gegen die Kraft seiner Feder 39 in den sich in diese Richtung vergrößernden Keilraum aus, so daß ein Verdrehen zwischen der Scheibe 24 und der ortsfesten Gehäusewandung 22 möglich ist. Die Kraft wird von der Sperrscheibe 24 über die Sperrhülse 23 und den Kupplungsbereich 35 des Stiftes 32 auf die Motorwelle 2 übertragen und gelangt damit über den Getriebezug 5 auf die Wickelwelle 6.

Kraftfluß vom Motor: Über die Sperrscheibe 24 wird die Kraft auf den Abstützzapfen 38 aufgebracht. Die zwischen dem Abstützzapfen 38 und den Klemmkörpern 27 jeweils angeordneten Federn 39 drücken den jeweiligen Klemmkörper 27 in den keilförmigen Spalt zwischen der Sperrscheibe 24 und der Innenwandung der zylinderförmigen Ausnehmung der Gehäusewandung 22. Es tritt eine Verklemmung zwischen der Gehäusewandung 22 und der Sperrscheibe 24 auf.

**Patentansprüche**

1.  Vorrichtung für die Bewegung eines Torblattes, insbesondere Rolltorpanzers, mittels eines motorischen Antriebes, vorzugsweise mit Elektromotor (1), und mittels eines wahlweise zu betätigenden Nothandantriebes, insbesondere mit abnehmbarer Handkurbel, dessen Abtriebswelle (19'; 30) im Notbetrieb mit der Motorwelle (2) des motorischen Antriebes in Verbindung steht, in die eine Lastmomentsperre (20) eingeschaltet ist, die bei fehlender Krafteinleitung in den Nothandbetrieb die Motorwelle (2) gegen Drehung gesichert festhält, **dadurch gekennzeichnet,** daß eine Sicherungseinrichtung für die Überwachung des motorischen Antriebes vorgesehen ist, die ein Fangglied aus einem an einer Wickelwelle (6) für die Aufnahme des Torblattes angeordneten Sicherheitsschneckenrad (8) und einer Sicherheitsschnecke (9) aufweist, die aufgrund des Eingriffes mit dem Sicherheitsschneckenrad (8) im Störungsfalle von letzterem angetrieben axial verschiebbar und hinsichtlich ihrer axialen Bewegung begrenzt ist, wobei die Sicherheitsschnecke (9) unter normalen Betriebsbedingungen und im Notbetriebsfall, im letzteren über eine getriebliche Verbindung (14, 15) mit der Abtriebswelle (19; 30) des Nothandantriebs, hinsichtlich der Wickelwellenrotation nachgeführt ist, daß die Motorwelle (2) und die Nothandabtriebswelle (19, 19'; 30) zusammen mit wenigstens einer weiteren Welle (18; 28) koaxial angeordnet sind und daß die weitere Welle (18; 28) ein Getrieberad (15) aufweist, das mit einem auf der Welle der Sicherheitsschnecke (9) verdrehfest angeordneten Getrieberad (14) getrieblich in Verbindung steht und mit Hilfe von Kupplungen (16, 17) mit der Motorwelle (2) und der Nothandabtriebswelle (19; 30) verbindbar ist, welche Kupplungen im Normalbetriebsfall ausgerückt und im Notfall eingerückt sind, wobei einer der Kupplungen (17; 24, 26, 27) die Lastmomentsperre (20) zugeordnet ist.

2.  Vorrichtung nach Anspruch 1, **dadurch gekennzeichnet,** daß an der Motorwelle (2) eine Bremse (3) vorgesehen ist, die bei Abschalten oder Ausfall des Motors (1) den Bremszustand gegen eine Drehbewegung der Motorwelle (2) einnimmt.

3. Vorrichtung nach Anspruch 1 oder 2,
   **dadurch gekennzeichnet,**
   daß die Sicherheitsschnecke (9) unter normalen Betriebsbedingungen mit Hilfe eines Stellmotors (13) hinsichtlich der Wickelwellenrotation nachgeführt ist.

4. Vorrichtung nach einem der Ansprüche 1 bis 3,
   **dadurch gekennzeichnet,**
   daß die Sicherheitsschnecke (9) im Störungsfalle von dem Sicherheitsschneckenrad (8) gegen einen Dämpfungskörper (12) hinsichtlich ihrer axialen Bewegung begrenzt ist.

5. Vorrichtung nach einem der Ansprüche 1 bis 4,
   **dadurch gekennzeichnet,**
   daß die Motorwelle (2) frei drehbar in einer die Lastmomentsperre (20) aufweisenden Sperrhülse (23) gelagert ist, daß die Sperrhülse (23) frei drehbar in einer Schalthülse (25) gelagert ist, die Schaltorgane (26, 27) für die Freischaltung der Lastmomentsperre (20) aufweist, und daß die Schalthülse (25) eine Nachführhülse (28) frei drehbar trägt, die das Getrieberad für die weitere Welle aufweist, wobei in eine koaxiale Aufnahmebohrung (31) der Motorwelle (2) längsverschiebbar und verdrehfest ein Kupplungs- und Rückstellstift (32) eingesetzt ist, der gegen die Kraft einer Feder (34) in Richtung auf die Bremse (3), diese lösend, verschiebbar ist und dessen der Bremse (3) abgewandtes Ende (35) längsverschiebbar und verdrehsicher in die Sperrhülse (23) eingreift und in Richtung der Federkraft in einen längsverschiebbar und verdrehfest ausgebildeten Eingriff mit der Schalthülse (25) einsetzbar ist, derart, daß ein an der Abtriebswelle (30) des Nothandantriebes (29) ausgebildeter Endbereich, der längsverschiebbar und verdrehfest in entsprechend ausgebildete koaxiale Öffnungen der Nachführhülse (28) und der Schalthülse (25) einzuführen ist, in der Einführlage die Nachführhülse (28) und die Schalthülse (25) verdrehfest verbindet und den Kupplungs- und Rückstellstift (32) auf die Bremse (3), diese lösend, längs verschiebt, so daß die verdrehfeste Verbindung über den Kupplungsbereich (35) des Kupplungs- und Rückstellstiftes (32) zwischen der Schalthülse (25) und der Sperrhülse (23) getrennt und diese mit der Motorwelle (2) verdrehfest verbunden ist.

6. Vorrichtung nach einem der Ansprüche 1 bis 5,
   **dadurch gekennzeichnet,**
   daß die Lastmomentsperre (20) in Verdrehrichtung klemmende, in die Klemmrichtung federnd beaufschlagte Klemmkörper (27) oder dergleichen aufweist, die von Schaltstiften (26) gegen die jeweilige Federkraft außer Klemmeingriff an einem ortsfesten Halteteil (22) überführbar sind.

**Claims**

1. A device for moving a door leaf, more particularly an armoured roller door, by means of a motor-drive, preferably an electric motor (1), and by means of an optionally operable manual emergency drive, more particularly having a detachable crank handle, the output shaft (19'; 30) of which drive is connected, in an emergency operation, to the motor shaft (2) of the motor-drive, to which a load momentum blocker (20) is connected which retains the motor shaft (2) so as to be non-rotationally secured when no force is transferred to the manual emergency drive, characterised in that a safety device is provided for monitoring the motor drive, said safety device having an engaging member comprising a safety worm wheel (8), arranged on a winding shaft (6) for receiving the door leaf, and a safety worm gear (9) which, as a result of being driven, in the case of a breakdown, by the safety worm (8) due to its engagement therewith, is axially displaceable and is restricted in respect of its axial movement, the safety worm gear (9) tracking the rotation of the winding shaft under normal operating conditions and in an emergency, which is done in the latter case via a gear connection (14, 15) by means of the output shaft (19; 30) of the manual emergency drive, in that the motor shaft (2) and the manual emergency output shaft (19, 19'; 30) are arranged so as to be coaxial together with at least one further shaft (18; 28), and in that the further shaft (18; 28) has a gear wheel (15) which has a gear connection with a gear wheel (14) rotationally fixedly arranged on the shaft of the safety worm gear (9) and is connectable, by means of couplings (16, 17), with the motor shaft (2) and the manual emergency output shaft (19; 30), said couplings being disengaged in the normal operational situation and being engaged in the emergency situation, the load momentum blocker (20) being associated with one of the couplings (17; 24, 26, 27).

2. A device according to claim 1, characterised in that a brake (3) is provided on the motor shaft (2) which enters the braking state when the motor (1) is switched off or fails, to counter a rotational movement of the motor shaft (2).

3. A device according to either claim 1 or 2, characterised in that, under normal operating conditions, the safety worm gear (9) tracks the rotation of the winding shaft, by means of a servo-motor (13).

4. A device according to any one of claims 1 to 3, characterised in that, in the case of a breakdown, the safety worm gear (9) is limited, by the safety worm wheel (8), in respect of an axial movement against a damping body (12).

5. A device according to any one of claims 1 to 4, characterised in that the motor shaft (2) is freely rotatably mounted in a blocking sleeve (23), in which the load momentum blocker (20) is arranged, that the blocking sleeve (23) is freely rotatably mounted in a switching sleeve (25), in which the switching members (26, 27) for the release circuit of the load momentum blocker (20) are arranged, and that the switching sleeve (25) carries, in a freely rotatable manner, a tracking sleeve (28), on which the gear wheel is arranged for the further shaft, a coupling and reset pin (32) being longitudinally displaceably and rotationally fixedly inserted in a coaxial receiving bore (31) of the motor shaft (2), said coupling and reset pin being displaceable, counter to the force of a spring (34), in the direction of the brake (3), thus releasing said brake, and the end (35) of said coupling and reset pin, remote from the brake (3), engaging in the blocking sleeve (23) so as to be longitudinally displaceable and non-rotatable, and being capable of being placed, in the direction of the spring force, in a longitudinally displaceable and non-rotatable engagement with the switching sleeve (25), in such a way that an end region formed on the output shaft (30) of the manual emergency drive (29) and intended to be introduced into correspondingly formed coaxial apertures in the tracking sleeve (28) and the switching sleeve (25) so as to be longitudinally displaceable and non-rotatable, has, when introduced, a non-rotatable connection with the tracking sleeve (28) and the switching sleeve (25), and displaces the coupling and reset pin (32) longitudinally in the direction of the brake (3), thus releasing said brake, which results in the non-rotatable connection, via the coupling region (35) of the coupling and reset pin (32), between the switching sleeve (25) and the blocking sleeve (23) being separated and in a non-rotatable connection with the motor shaft (2) being established.

6. A device according to any one of claims 1 to 5, characterised in that the load momentum blocker (20) has clamping bodies (27) or the like, which clamp in the rotational direction and are resiliently acted upon in the clamping direction, said clamping bodies being capable of being moved by switching pins (26), counter to the relevant spring force, out of clamping engagement on a fixed mounting part (22).

**Revendications**

1. Dispositif de manoeuvre d'un panneau de porte, en particulier des éléments roulant, au moyen d'un entraînement motorisé, de préférence à moteur électrique (1) et d'un entraînement mécanique manuel, utilisable à volonté, comportant une manivelle amovible dont l'arbre de sortie (19;30) peut être relié à l'arbre moteur de l'entraînement motorisé par une liaison comprenant un blocage d'un couple résistant (20) qui empêche la rotation de l'arbre moteur (2) en cas d'absence de la force alimentant l'entraînement manuel de secours, caractérisé en ce qu'il est prévu, pour surveiller l'entraînement motorisé, un dispositif de sécurité comportant un organe d'arrêt constitué d'une roue hélicoïdale de sécurité (8) montée sur l'arbre enrouleur (6) recevant le rideau de la porte, et engrenant avec une vis hélicoïdale de sécurité (9) laquelle, en cas de défaillance, peut être déplacée axialement par rapport à la roue, sur une distance limitée, la vis de sécurité (9) étant entraînée de manière à suivre la rotation de l'arbre enrouleur, dans les conditions normales de fonctionnement et, en fonctionnement de secours par l'intermédiaire d'une liaison mécanique (14, 15) avec l'arbre de sortie (19, 30) de l'entraînement manuel de secours, l'arbre moteur (2) et l'arbre de sortie de l'entraînement manuel de secours (19, 19'; 30) étant montés coaxiaux avec au moins un autre arbre (18; 28), lequel porte un pignon d'engrenage (16) en liaison d'entraînement avec un pignon d'engrenage (14) solidaire de l'arbre de la vis hélicoïdale de sécurité, l'arbre (18, 28) pouvant être relié par des coupleurs (16, 17) à l'arbre moteur (2) et à l'arbre de sortie de l'entraînement manuel de secours (19; 30) ces coupleurs étant relâchés en fonctionnement normal, activés en fonctionnement de secours, un des coupleurs (17; 24; 26; 27) étant associé au couple résistant (20).

2. Dispositif selon la revendication 1, caractérisé en ce que l'arbre moteur (2) est équipé d'un frein (3) qui, en cas de non alimentation ou de défaillance du moteur (1) se met en position de freinage empêchant la rotation de l'arbre moteur (2).

3. Dispositif selon la revendication 1 ou 2, caractérisé en ce que la vis hélicoïdale de sécurité (9), en fonctionnement normal, est entraîné de manière à suivre la rotation de l'arbre enrouleur, par un moteur de réglage (13).

4. Dispositif selon une des revendications 1 à 3, caractérisé en ce que la vis hélicoïdale de sécurité (9), en cas de défaillance, de la roue hélicoïdale de sécurité (8) a son mouvement de déplacement axial limité par un amortisseur (12).

5. Dispositif selon une des revendications 1 à 4, caractérisé en ce que l'arbre moteur (2) peut tourner librement dans une douille d'arrêt (23) portant le couple résistant (20), la douille d'arrêt (23) peut tourner elle-même librement dans une douille de connexion (25) équipée des organes de connexion (26, 27) produisant la libération du couple résistant (20), la douille de connexion (25) constituant le palier de rotation pour une fourrure (28) portant la roue d'entraînement de l'autre arbre, un alésage axial (31) de l'arbre moteur (2) sert de logement à une broche d'accouplement et de rappel (32) pouvant coulisser sans tourner dans l'arbre moteur (2) et qui par déplacement contre l'action d'un ressort en direction d'un frein (3) libère celui-ci, l'extrémité (35) située à l'opposé du frein pouvant coulisser sans tourner dans la douille d'arrêt (23), tandis qu'elle peut, dans le sens d'action du ressort, venir coulisser sans tourner dans la douille de connexion (25) de sorte qu'une extrémité de l'arbre de sortie (30) de l'entraînement manuel de secours (29) est conçue pour pouvoir être engagée en coulissant, mais sans tourner dans des ouvertures coaxiales réalisées en correspondance dans la fourrure (28) et la douille d'enclenchement (25), rendant ainsi ces pièces solidaires en rotation et déplaçant la broche de retour à zéro (32) en direction du frein qui se trouve libéré, d'où il résulte que se trouve rompue la liaison de rotation assurée par la zone de couplage de la broche (32) entre la douille de connexion (25) et la douille d'arrêt (23) laquelle se trouve alors solidarisée en rotation avec l'arbre moteur (2).

6. Dispositif selon une des revendications 1 à 5, caractérisé en ce que le couple résistant (20) est équipé d'organes de coincement (27) ou analogues, agissant par rotation forcée et soumis à une pression élastique dans le sens du coincement, chacun de ces organes pouvant être écarté de sa position de coincement, le long d'une pièce de maintien fixe (22), par un doigt de connexion (26), contre l'action élastique exercée sur l'organe de coincement.

FIG. 1

FIG. 2

FIG. 3